# EUROPEAN PATENT APPLICATION

(11) **EP 4 191 068 A1**
(43) Date of publication of application: **07.06.2023**
(21) Application number: 20946968.3
(22) Date of filing: 30.07.2020
(51) Int. Cl.: F04D 27/00

(54) **AIR BLOWING DEVICE AND METHOD FOR CONTROLLING AIR BLOWING DEVICE**

(71) Applicant: MITSUBISHI ELECTRIC CORPORATION, Chiyoda-ku Tokyo 100-8310 (JP)
(72) Inventor: MATSUMOTO, Kohei, Tokyo 100-8310 (JP); DOI, Atsuo, Tokyo 100-8310 (JP); FUKAYA, Yoshihiro, Tokyo 100-8310 (JP)
(74) Representative: Witte, Weller & Partner Patentanwälte mbB
(86) International application number: PCT/JP2020/029333
(87) International publication number: WO 2022/024323

(57) **Abstract**

A blower (1) includes a blower fan (2), a direct current motor (3), and a motor controller (24). The direct current motor (3) rotationally drives the blower fan (2). The motor controller (24) controls the direct current motor (3). In controlling the direct current motor (3), the motor controller (24) uses a control method selected out of a plurality of control methods having characteristic curves that incline differently from one another and intersect one another. Each of the characteristic curves represents an air volume versus static pressure relationship of the blower fan (2).

## Description

### Field

The present disclosure relates to a blower including a direct current motor that rotationally drives a blower fan and also relates to a method for controlling the blower.

### Background

A blower that controls air volume by rotationally driving a blower fan with a direct current motor has been known as a blower that has an air blowing function, such as a ventilator or a bathroom ventilation and heating apparatus. Constant rotational speed control, constant current control, and constant command voltage control are among known examples of a method of controlling the direct current motor in this type of blower.

The constant rotational speed control is a control method that includes detecting an actual rotational speed of the direct current motor and performing feedback control of the direct current motor so that the detected actual rotational speed will match a target rotational speed. The constant current control is a control method that includes detecting a value of actual current flowing in the direct current motor, that is to say, an actual current value and performing feedback control of the direct current motor so that the detected actual current value will match a target current value. The constant command voltage control is a control method (feedforward control) that has a command voltage value constant for driving the direct current motor and thus does not cause feedback, unlike the constant rotational speed control and the constant current control.

Conventional blowers perform one of the constant rotational speed control, the constant current control, and the constant command voltage control. For example, a blower disclosed in Patent Literature 1 performs the constant rotational speed control.

### Citation List

### Patent Literature

Patent Literature 1: Japanese Patent Application Laid-open No. 2012-241969

### Summary

### Technical Problem

A characteristic curve that represents a relationship between the air volume and static pressure of the blower fan, which is rotationally driven by the direct current motor, differs depending on the method of controlling the direct current motor. In actual construction design of a blower, the blower is selected on the basis of: pressure loss that is determined by a required amount of ventilation, a length of a duct, and others; a characteristic curve of the blower, and others. However, there are cases where construction of the duct or another does not go as designed. If the pressure loss is higher than designed, the air volume cannot be ensured. If the pressure loss is lower than designed, the air volume will be excessive.

Therefore, there have been cases with the conventional blowers where: air volume control is difficult; an auxiliary fan needs to be added to ensure the air volume and the static pressure; and conversely a damper needs to be installed to increase the pressure loss and decrease the air volume.

The present disclosure has been made in view of the above, and an object of the present disclosure is to obtain a blower that is capable of easy air volume control.

### Solution to Problem

In order to solve the above-stated problem and achieve the object, a blower according to the present disclosure includes a blower fan, a direct current motor, and a motor controller. The direct current motor rotationally drives the blower fan. The motor controller controls the direct current motor. In controlling the direct current motor, the motor controller uses a control method selected from a plurality of control methods having characteristic curves that incline differently from one another and intersect one another. Each of the characteristic curves represents an air volume versus static pressure relationship of the blower fan.

### Advantageous Effect of Invention

The blower according to the present disclosure produces an effect of enabling easy air volume control.

### Brief Description of Drawings

FIG. 1 is a diagram illustrating a configuration example of a blower according to a first embodiment.
FIG. 2 is a diagram illustrating an example of a control method setting screen that is displayed on a remote controller according to the first embodiment.
FIG. 3 is a diagram illustrating an example of an air volume and static pressure setting screen that is displayed on the remote controller according to the first embodiment.
FIG. 4 is a diagram illustrating an example including characteristic curves that are obtained as representations of air volume versus static pressure relationships of a blower fan when a direct current motor is controlled with control methods in the blower according to the first embodiment.
FIG. 5 is a diagram illustrating an example including the characteristic curve that is obtained when constant rotational speed control is performed as the control on the direct current motor in the blower according to the first embodiment.
FIG. 6 is a diagram illustrating an example including the characteristic curve that is obtained when constant current control is performed as the control on the direct current motor in the blower according to the first embodiment.
FIG. 7 is a diagram illustrating an example including the characteristic curve that is obtained when constant command voltage control is performed as the control on the direct current motor in the blower according to the first embodiment.
FIG. 8 is a diagram illustrating an example including the characteristic curves that are obtained when the constant rotational speed control and the constant current control are performed as the controls on the direct current motor in the blower according to the first embodiment.
FIG. 9 is a diagram illustrating an example including the characteristic curves that are obtained when the constant current control and the constant command voltage control are performed as the controls on the direct current motor in the blower according to the first embodiment.
FIG. 10 is a diagram illustrating an example including the characteristic curves that are obtained when the constant rotational speed control and the constant command voltage control are performed as the controls on the direct current motor in the blower according to the first embodiment.
FIG. 11 is a flowchart illustrating an example of processing by a processor of the blower according to the first embodiment.

### Description of Embodiment

With reference to the drawings, a detailed description is hereinafter provided of a blower and a method for controlling the blower according to an embodiment.

### First Embodiment.

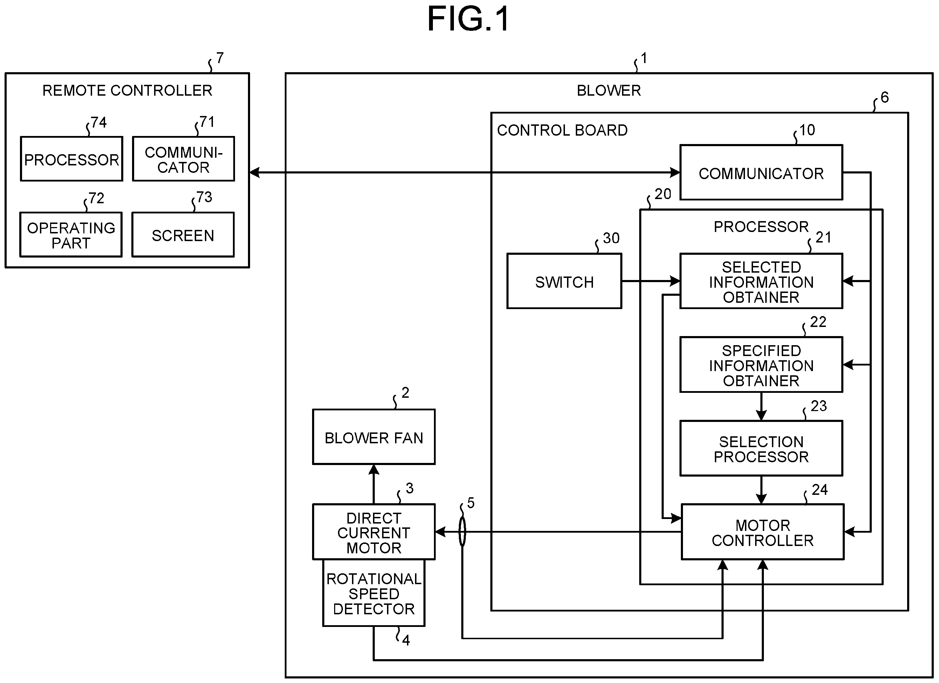

FIG. 1 is a diagram illustrating a configuration example of a blower according to a first embodiment. The blower 1 illustrated in FIG. 1 is, for example, a ventilator or a bathroom ventilation and heating apparatus and includes a blower fan 2, a direct current motor 3, a rotational speed detector 4, a current detector 5, and a control board 6.

The blower fan 2 includes, for example, an impeller (not illustrated) and an air channel (not illustrated) and is rotationally driven by the direct current motor 3. The impeller is attached to a rotating shaft (not illustrated) of the direct current motor 3 and rotates with rotation of the rotating shaft of the direct current motor 3. The air channel is a space through which air blown by the rotation of the impeller passes and is provided inside a housing (not illustrated) of the blower 1. The air channel defines, for example, an exhaust air passage between a room interior and a duct tube.

The direct current motor 3 is, for example, a permanent magnet field direct current motor or an electromagnet field direct current motor. The direct current motor 3 is controlled by a command voltage supplied from the control board 6 and rotates the rotating shaft in accordance with the command voltage. The direct current motor 3 is not limited to the permanent magnet field direct current motor or the electromagnet field direct current motor.

The rotational speed detector 4 detects an actual rotational speed of the direct current motor 3. The actual rotational speed of the direct current motor 3 is an actual rotational speed of the rotating shaft of the direct current motor 3. The current detector 5 detects an actual current value of the direct current motor 3. The actual current value of the direct current motor 3 is a value of actual current flowing from the control board 6 into the direct current motor 3.

The control board 6 includes a communicator 10, a processor 20, and a switch 30. The communicator 10, the processor 20, and the switch 30 are mounted on a circuit board (not illustrated). The communicator 10 performs wired communication with a remote controller 7 and transmits and receives information to and from the remote controller 7. The communication between the remote controller 7 and the communicator 10 may be wireless.

The processor 20 controls the direct current motor 3 with a control method selected from a plurality of control methods on the basis of information obtained from the switch 30 or the remote controller 7. The plurality of control methods include constant rotational speed control, constant current control, and constant command voltage control.

The switch 30 is a switch that is used in selecting an arbitrary control method to be performed by the processor 20 out of the constant rotational speed control, the constant current control, and the constant command voltage control. The switch 30 includes, for example, two on-off switches. The two on-off switches enable the switch 30 to switch to four types of states. In this case, the processor 20 controls the direct current motor 3 with the control method that corresponds to on or off states of the two on-off switches among the constant rotational speed control, the constant current control, and the constant command voltage control. When, for example, the two on-off switches are both off, no control method is being selected.

The switch 30 may be configured to include a rotary switch that is capable of switching between three notches. In that case, the processor 20 controls the direct current motor 3 with the control method that corresponds to a point to which the rotary switch has switched among the constant rotational speed control, the constant current control, and the constant command voltage control. In cases where the switch 30 is a rotary switch capable of switching between four or more notches, the control method will be in no state of being selected when, for example, the rotary switch has switched to a particular point.

The switch 30 may be configured to include a plurality of rotary switches that enable setting each of an air volume value and a static pressure value for the blower fan 2. In that case, the switch 30 includes, for example, a first rotary switch that sets the air volume of the blower fan 2 and a second rotary switch that sets the static pressure of the blower fan 2. Among the constant rotational speed control, the constant current control, and the constant command voltage control, the processor 20 controls the direct current motor 3 with the control method that corresponds to points to which the first and second rotary switches have switched. The air volume and static pressure values will be set to no values when, for example, the first and second rotary switches have switched to particular points.

The remote controller 7 includes a communicator 71, an operating part 72, a screen 73, and a processor 74. The communicator 71 communicates with the communicator 10 of the blower 1 and transmits and receives information to and from the blower 1. The operating part 72 includes a plurality of operation buttons to be manipulated by an operator of the remote controller 7. The operation buttons include, for example, arrow buttons and screen switching buttons or setting buttons, among others. The operator of the remote controller 7 is, for example, a worker who installs the blower 1 or a user of the blower 1 and may be hereinafter described simply as the operator.

The screen 73 displays, for example, setting screens where operation of the blower 1 is manipulated. The processor 74 is capable of changing screens to be displayed by the screen 73 on the basis of operation of the operating part 72 and having the communicator 71 transmit the information such as selected information or specified information to the blower 1. Each of the selected information and the specified information is an example of information on the control method.

The screens that the processor 74 causes the screen 73 to display include a control method setting screen and an air volume and static pressure setting screen. The control method setting screen is a screen that allows the operator to select one control method from the constant rotational speed control, the constant current control, and the constant command voltage control. The air volume and static pressure setting screen is a screen where the air volume value and the static pressure value are specified for the blower fan 2. The control method setting screen and the air volume and static pressure setting screen are described below in this order.

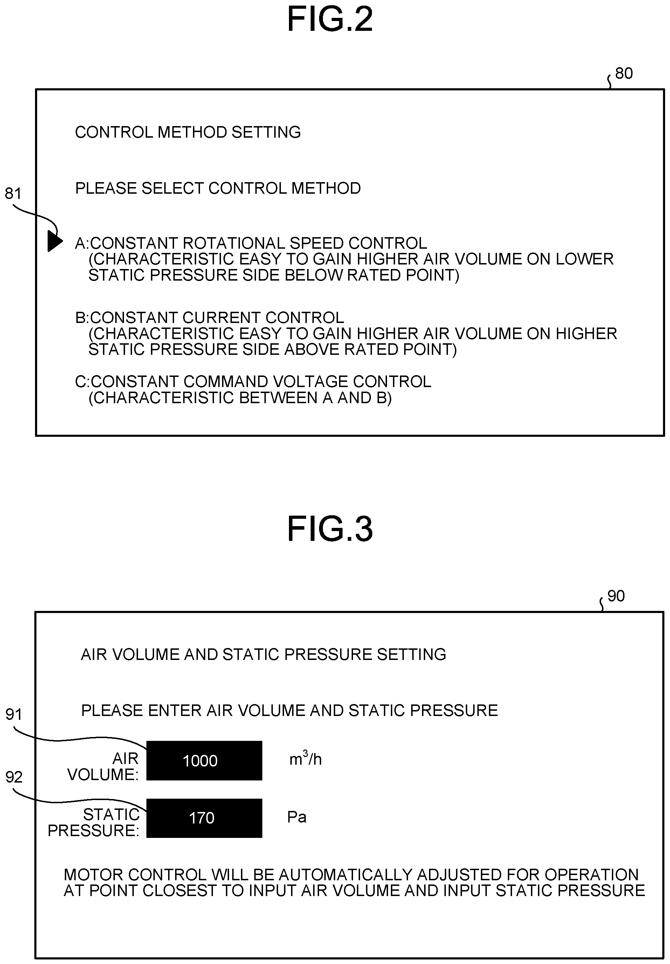

FIG. 2 is a diagram illustrating an example of the control method setting screen that is displayed on the remote controller according to the first embodiment. A pointer 81 shown as a black triangle on the control method setting screen 80 illustrated in FIG. 2 is moved by the processor 74 in accordance with the operation of the operating part 72 by the operator. For example, the operator can select the control method to be performed by the blower 1 by manipulating the arrow buttons to move the pointer 81 to the point where the desired control method is displayed and manipulating a select button.

As the control method is selected by the operator, the processor 74 causes the communicator 71 to transmit the information on the control method selected by the operator, namely the selected information to the blower 1. When, for example, the select button is manipulated in a state illustrated in FIG. 2, the processor 74 causes the communicator 71 to transmit information on the constant rotational speed control as the selected information to the blower 1. Detailed descriptions are provided later of terms that appear on the control method setting screen 80 illustrated in FIG. 2, such as "rated point", "lower static pressure", and "higher static pressure".

FIG. 3 is a diagram illustrating an example of the air volume and static pressure setting screen that is displayed on the remote controller according to the first embodiment. The air volume and static pressure setting screen 90 illustrated in FIG. 3 includes an air volume value setting frame 91 where the air volume value is specified for the blower fan 2 and a static pressure value setting frame 92 where the static pressure value is specified for the blower fan 2. For example, the operator can change the air volume value shown in the air volume value setting frame 91 for the blower fan 2 and the static pressure value shown in the static pressure value setting frame 92 for the blower fan 2 by manipulating the arrow buttons. After changing each of the air volume value and the static pressure value for the blower fan 2, the operator can specify the air volume value and the static pressure value for the blower fan 2 by manipulating the select button.

As the air volume value and the static pressure value for the blower fan 2 are specified by the operator, the processor 74 causes the communicator 71 to transmit the information that includes each values of the air volume and static pressure specified for the blower fan 2 by the operator, namely the specified information to the blower 1.

On the basis of the selected information or the specified information transmitted from the remote controller 7 and received by the communicator 10, the processor 20 of the blower 1 controls the direct current motor 3 with the control method selected from the constant rotational speed control, the constant current control, and the constant command voltage control. A description is provided here of characteristic curves that are obtained as representations of air volume versus static pressure relationships of the blower fan 2 when the constant rotational speed control, the constant current control, and the constant command voltage control are performed.

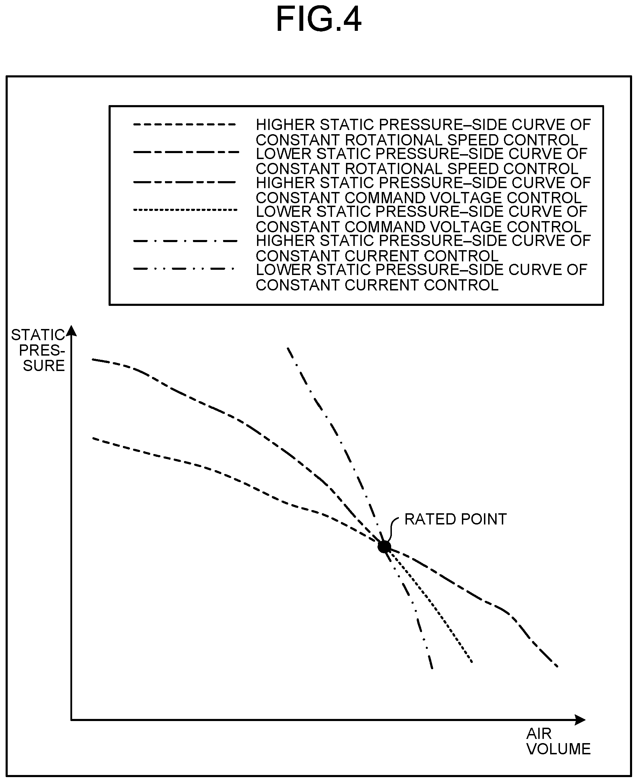

FIG. 4 is a diagram illustrating an example including characteristic curves that are obtained as representations of the air volume versus static pressure relationships of the blower fan when the direct current motor is controlled with each of the control methods in the blower according to the first embodiment. In FIG. 4, a horizontal axis represents the air volume, and a vertical axis represents the static pressure. Shown in the example illustrated in FIG. 4 are the characteristic curves of the blower fan 2 that are obtained when the constant rotational speed control, the constant current control, and the constant command voltage control are performed as the controls on the direct current motor 3 and a rated point as a common point through which these characteristic curves pass. The respective characteristic curves of the constant rotational speed control, the constant current control, and the constant command voltage control are not limited to those in the example illustrated in FIG. 4, provided that the characteristic curves incline differently from one another and intersect one another.

In the example illustrated in FIG. 4, the characteristic curves of the blower fan 2 that are obtained when the constant rotational speed control, the constant current control, and the constant command voltage control are performed as the controls on the direct current motor 3 are indicated by different dashed lines. Moreover, each of the characteristic curves in FIG. 4 has a higher static pressure portion and a lower static pressure portion that are respectively higher and lower in static pressure than the rated point and are indicated by different dashed lines. The portion of each characteristic curve that is higher in static pressure than the rated point is described as a curve on a higher static pressure side, and where the static pressure is lower in each characteristic curve than the rated point is described as a curve on a lower pressure side. The air volume on the higher static pressure side is smaller than that of the rated point, and the air volume on the lower static pressure side is larger than that of the rated point.

As illustrated in FIG. 4, on the lower static pressure side below the rated point, the constant rotational speed control shows the highest static pressure, followed by the constant command voltage control, and the constant current control shows the lowest static pressure. On the other hand, on the higher static pressure side above the rated point, the constant current control shows the highest static pressure, followed by the constant command voltage control, and the constant rotational speed control shows the lowest static pressure.

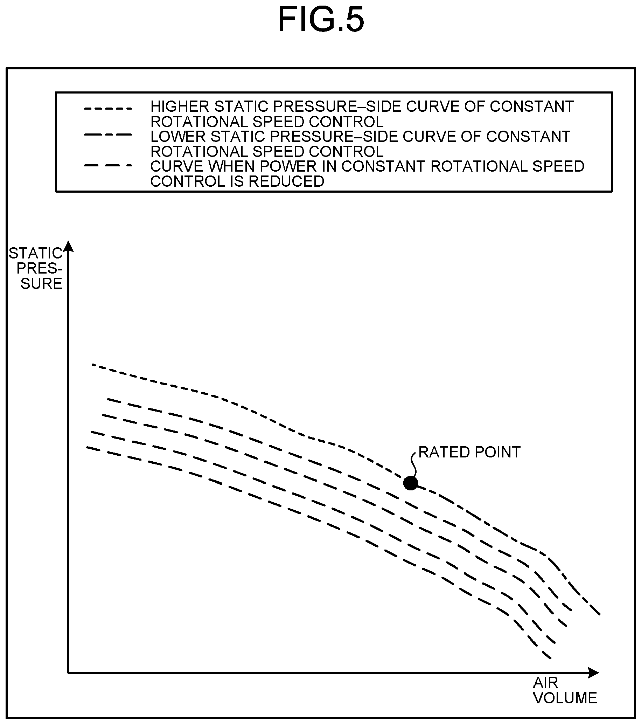

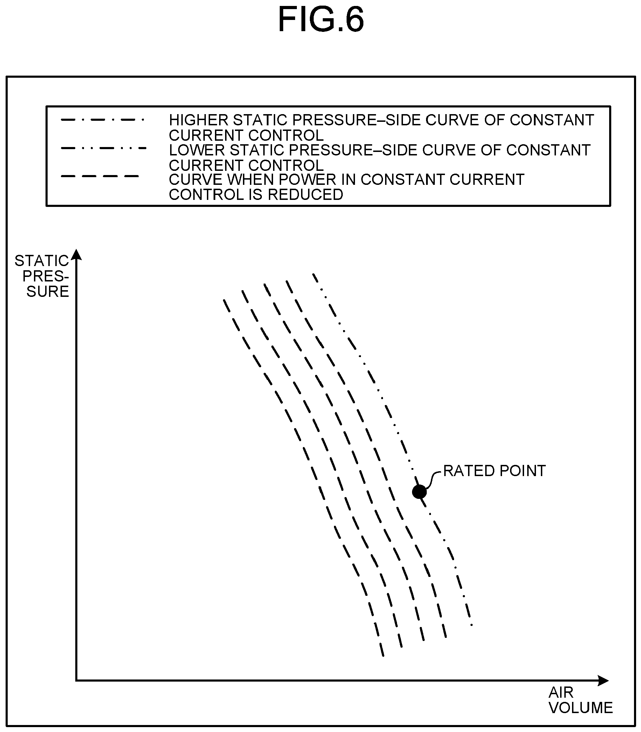

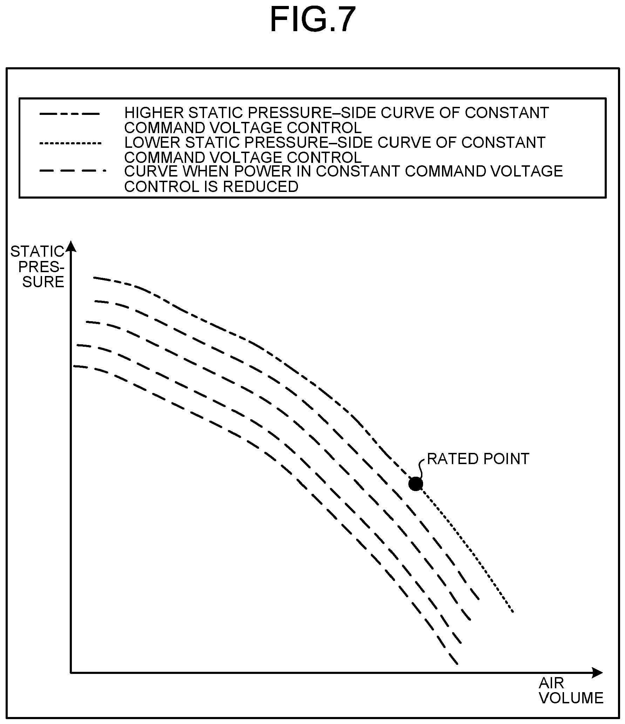

FIG. 5 is a diagram illustrating an example including the characteristic curve that is obtained when the constant rotational speed control is performed as the control on the direct current motor in the blower according to the first embodiment. FIG. 6 is a diagram illustrating an example including the characteristic curve that is obtained when the constant current control is performed as the control on the direct current motor in the blower according to the first embodiment. FIG. 7 is a diagram illustrating an example including the characteristic curve that is obtained when the constant command voltage control is performed as the control on the direct current motor in the blower according to the first embodiment. In each of FIGS. 5 to 7, a horizontal axis represents the air volume, and a vertical axis represents the static pressure. In each of FIGS. 5 to 7, curves that represent air volume versus static pressure relationships when power is reduced in the corresponding control method are described as curves when power is reduced.

As illustrated in FIGS. 5 to 7, although each of the control methods enables fine-tuning in a direction that reduces the power relative to the characteristic curve, fine-tuning in a direction that increases the power relative to the characteristic curve cannot be done with each control method since the characteristic curve represents the air volume versus static pressure relationship in a rated operation. Therefore, in cases where the method for controlling the blower 1 is limited to one of the constant rotational speed control, the constant current control, and the constant command voltage control, regulating the air volume by fine-tuning in the direction that increases the power is difficult after the blower 1 is installed. Fine-tuning in the direction that reduces the power is enabled by decreasing the command voltage for the direct current motor 3. The direction that reduces the power refers to a direction in which the static pressure becomes lower for the same air volume than the characteristic curve.

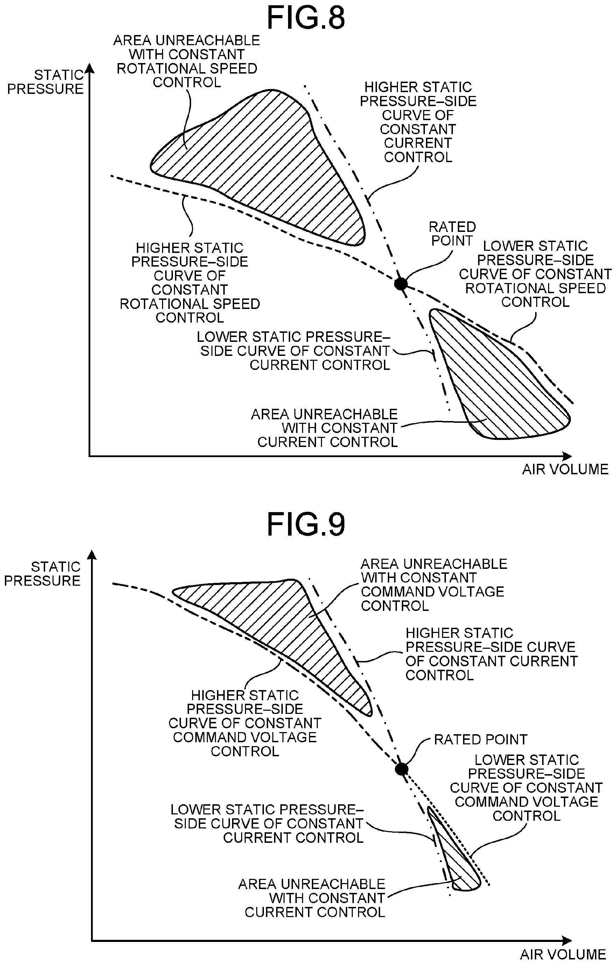

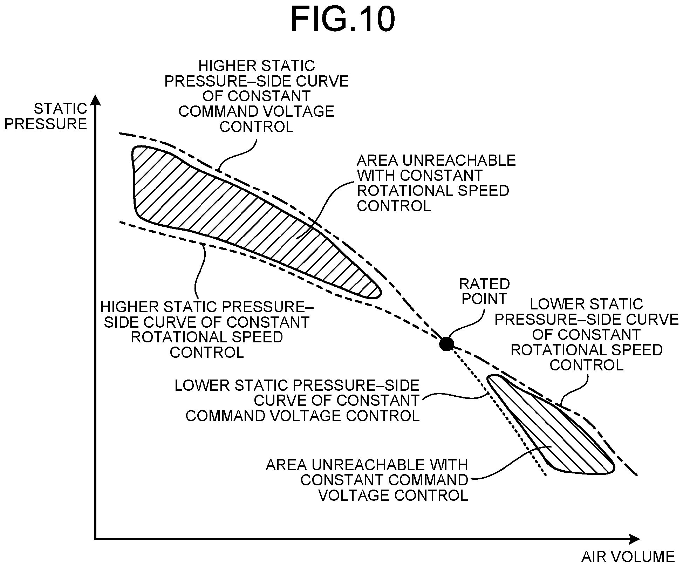

FIG. 8 is a diagram illustrating an example including the characteristic curves that are obtained when the constant rotational speed control and the constant current control are performed as the controls on the direct current motor in the blower according to the first embodiment. FIG. 9 is a diagram illustrating an example including the characteristic curves that are obtained when the constant current control and the constant command voltage control are performed as the controls on the direct current motor in the blower according to the first embodiment. FIG. 10 is a diagram illustrating an example including the characteristic curves that are obtained when the constant rotational speed control and the constant command voltage control are performed as the controls on the direct current motor in the blower according to the first embodiment. In each of FIGS. 8 to 10, a horizontal axis represents the air volume, and a vertical axis represents the static pressure.

As illustrated in FIG. 8, there exist: a higher static pressure-side area that is unreachable with the constant rotational speed control but reachable with the constant current control; and a lower static pressure-side area that is unreachable with the constant current control but reachable with the constant rotational speed control. Therefore, when the blower 1 is configured so that the constant rotational speed control and the constant current control are selectively performed in a method of controlling the direct current motor 3, air volume control becomes easier than when the method of controlling the direct current motor 3 is only one of the constant rotational speed control and the constant current control.

As illustrated in FIG. 9, there exist: a higher static pressure-side area that is unreachable with the constant command voltage control but reachable with the constant current control; and a lower static pressure-side area that is unreachable with the constant current control but reachable with the constant command voltage control. Therefore, when the blower 1 is configured so that the constant current control and the constant command voltage control are selectively performed in a method of controlling the direct current motor 3, the air volume control becomes easier than when the method of controlling the direct current motor 3 is only one of the constant current control and the constant command voltage control.

As illustrated in FIG. 10, there exist: a higher static pressure-side area that is unreachable with the constant rotational speed control but reachable with the constant command voltage control; and a lower static pressure-side area that is unreachable with the constant command voltage control but reachable with the constant rotational speed control. Therefore, when the blower 1 is configured so that the constant rotational speed control and the constant command voltage control are selectively performed in a method of controlling the direct current motor 3, the air volume control becomes easier than when the method of controlling the direct current motor 3 is only one of the constant rotational speed control and the constant command voltage control.

As described above, when at least two of the control methods that include the constant rotational speed control, the constant current control, and the constant command voltage control are enabled to be selectively performed, the air volume control becomes easier than when the single control method is enabled to be performed. Therefore, the blower 1 is configured to enable the three control methods, that is to say, the constant rotational speed control, the constant current control, and the constant command voltage control to be selectively performed. The blower 1 may be configured to enable two of the control methods that include the constant rotational speed control, the constant current control, and the constant command voltage control to be selectively performed.

Returning to FIG. 1 the description of the processor 20 is resumed. As illustrated in FIG. 1, the processor 20 includes a selected information obtainer 21, a specified information obtainer 22, a selection processor 23, and a motor controller 24.

The selected information obtainer 21 obtains the selected information that is the information on the control method selected from the constant rotational speed control, the constant current control, and the constant command voltage control. For example, from the remote controller 7 via the communicator 10, the selected information obtainer 21 is capable of obtaining the selected information, namely the information on the control method selected by the operator with the remote controller 7 from the constant rotational speed control, the constant current control, and the constant command voltage control. For example, the operator selects the control method with the remote controller 7 by manipulating the operating part 72 with the control method setting screen 80 illustrated in FIG. 2 displayed on the screen 73 as described above.

The selected information obtainer 21 is also capable of obtaining from the switch 30 the selected information, namely the information on the control method selected by the switch 30 from the constant rotational speed control, the constant current control, and the constant command voltage control.

For example, the selected information obtainer 21 notifies the motor controller 24 of the selected information obtained from either the remote controller 7 or the switch 30. For example, the selected information obtainer 21: notifies the motor controller 24 of the selected information from the remote controller 7 when the selected information is obtained from the remote controller 7 via the communicator 10; and when no selected information is obtained from the remote controller 7 via the communicator 10, the selected information obtainer 21 notifies the motor controller 24 of the selected information obtained from the switch 30.

The motor controller 24 controls the direct current motor 3 with the control method specified in the selected information notified by the selected information obtainer 21. Thus, the motor controller 24 can control the direct current motor 3 with the control method selected by the operator using the remote controller 7 or the switch 30.

When, for example, the selected information notified by the selected information obtainer 21 is the information on the constant rotational speed control, the motor controller 24 controls the direct current motor 3 with the constant rotational speed control. In this case, the motor controller 24 performs feedback control for causing the actual rotational speed of the direct current motor 3 that is detected by the rotational speed detector 4 to match a target rotational speed in controlling the direct current motor 3. For example, the motor controller 24: decreases the command voltage that drives the direct current motor 3 if the actual rotational speed detected by the rotational speed detector 4 is greater than the target rotational speed; and increases the command voltage if the actual rotational speed detected by the rotational speed detector 4 is smaller than the target rotational speed, thus gradually bringing the rotational speed of the direct current motor 3 closer to the target rotational speed.

When the selected information notified by the selected information obtainer 21 is information on the constant current control, the motor controller 24 controls the direct current motor 3 with the constant current control. In this case, the motor controller 24 performs feedback control for causing the actual current value that is detected by the current detector 5 to match a target current value in controlling the direct current motor 3. For example, the motor controller 24: decreases the command voltage that drives the direct current motor 3 if the actual current value detected by the current detector 5 is greater than the target current value; and increases the command voltage if the actual current value detected by the current detector 5 is smaller than the target current value, thus gradually bringing the actual current value closer to the target current value.

When the selected information notified by the selected information obtainer 21 is information on the constant command voltage control, the motor controller 24 controls the direct current motor 3 with the constant command voltage control. In this case, the motor controller 24 controls the direct current motor 3 with the command voltage set at a constant value.

The specified information obtainer 22 obtains, via the communicator 10, the specified information that includes the air volume value and the static pressure value for the blower fan 2. The specified information is the information that the operator transmits from the remote controller 7 to the blower 1 by performing a specific operation on the remote controller 7. For example, the operator specifies the air volume and the static pressure for the blower fan 2 with the remote controller 7 by manipulating the operating part 72 with the air volume and static pressure setting screen 90 illustrated in FIG. 3 displayed on the screen 73 as described above.

On the basis of the specified information obtained by the specified information obtainer 22, the selection processor 23 selects the control method that has among the plural characteristic curves of the constant rotational speed control, the constant current control, and the constant command voltage control the characteristic curve satisfying a condition preset for an operation point that is identified by the air volume and static pressure values specified in the specified information. The operation point that is identified by the air volume and static pressure values included in the specified information is hereinafter described as an identified point.

The characteristic curve that satisfies the condition preset for the identified point refers to the characteristic curve that is closest to the identified point and has the identified point in the direction that reduces the power. The characteristic curve that has the identified point in the direction that reduces the power has a higher static pressure than the identified point at the same air volume as the identified point.

In cases where, for example, the identified point is in the area that is unreachable with the constant rotational speed control in FIG. 8, the selection processor 23 selects the control method that has the characteristic curve closest to the identified point from the constant current control and the constant command voltage control. For example, the selection processor 23 selects the constant command voltage control if the identified point is in the area that is unreachable with the constant rotational speed control in FIG. 10. The selection processor 23 selects the constant current control if the identified point is in the area that is unreachable with the constant command voltage control in FIG. 9.

In cases where the identified point is in the area that is unreachable with the constant current control in FIG. 8, the selection processor 23 selects the control method that has the characteristic curve closest to the identified point from the constant rotational speed control and the constant command voltage control. For example, the selection processor 23 selects the constant command voltage control if the identified point is in the area that is unreachable with the constant current control in FIG. 9. The selection processor 23 selects the constant rotational speed control if the identified point is in the area that is unreachable with the constant command voltage control in FIG. 10.

It is to be noted that the characteristic curve that satisfies the condition preset for the identified point is not limited to the above-described examples. For example, the characteristic curve that satisfies the condition preset for the identified point only has to be the characteristic curve that has the identified point in the direction that reduces the power and thus does not have to be closest to the identified point.

The motor controller 24 controls the direct current motor 3 with the control method selected by the selection processor 23. Thus, the processor 20: can select the control method based on the air volume and static pressure values specified by the operator using the remote controller 7; and can control the direct current motor 3 with the selected control method.

In cases where there are the control method selected by the selection processor 23 and the control method specified in the selected information notified by the selected information obtainer 21, the motor controller 24 can give priority to the control method selected by the selection processor 23 to control the direct current motor 3. In cases where there are the control method selected by the selection processor 23 and the control method specified in the selected information notified by the selected information obtainer 21, the motor controller 24 can prioritize and use the control method specified by the operator with the remote controller 7 from these control methods.

While the constant rotational speed control, the constant current control, and the constant command voltage control are given as the examples of the control method to be performed by the blower 1 in the above-described examples, in addition to the constant rotational speed control, the constant current control, and the constant command voltage control, the blower 1 is capable of performing control methods different from these control methods.

In controlling the direct current motor 3 with the control method selected by the selection processor 23, the motor controller 24 is also capable of fine-tuning in the direction that reduces the power so that an operation point matches the identified point.

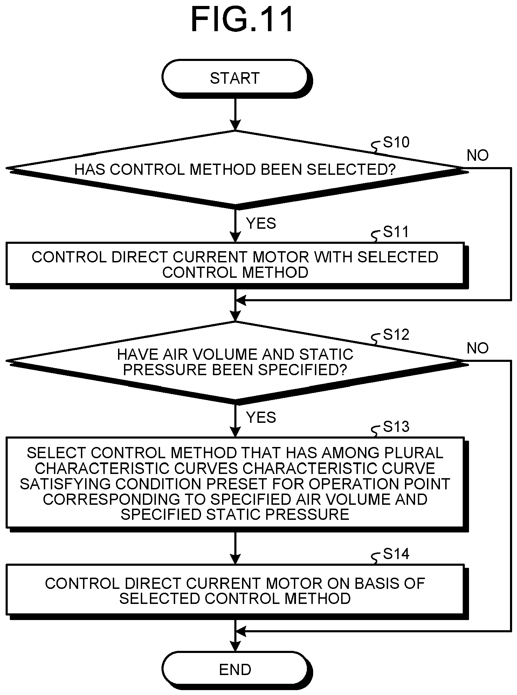

With reference to a flowchart, a description is provided next of processing by the processor 20 of the blower 1. FIG. 11 is the flowchart illustrating an example of the processing by the processor of the blower according to the first embodiment. The processor 20 of the blower 1 performs the processing illustrated in FIG. 11.

As illustrated in FIG. 11, the processor 20 of the blower 1 determines whether or not the control method has been selected (step S10). When the control method has been selected by the remote controller 7 or the switch 30, the processor 20 determines in the process of step S10 that the control method has been selected.

If the determination is that the control method has been selected (step S10: Yes), the processor 20 controls the direct current motor 3 with the selected control method (step S11). As the process of step S11 ends or if the determination is that no control method has been selected (step S10: No), the processor 20 determines whether or not the air volume and the static pressure have been specified (step S12). When, for example, the specified information has been received by the communicator 10, the processor 20 determines in the process of step S12 that the air volume and the static pressure have been specified.

If the determination is that the air volume and the static pressure have been specified (step S12: Yes), the processor 20 selects the control method that has among the plural characteristic curves the characteristic curve satisfying the condition preset for the operation point that corresponds to the specified air volume and the specified static pressure (step S13). The processor 20 then controls the direct current motor 3 with the control method selected at step S13 (step S14).

As the process of step S14 ends or if the determination is that the air volume and the static pressure have not been selected (step S12: No), the processor 20 ends the processing illustrated in FIG. 11.

The processor 20 includes, for example, a processor and a memory. The processor implements the functions of the processor 20 by reading out and executing programs stored in the memory. For example, the processor is an example of processing circuit and includes at least one of a central processing unit (CPU), a digital signal processor (DSP), or a system large-scale integration (LSI). The memory includes at least one of a random-access memory (RAM), a read-only memory (ROM), a flash memory, an erasable programmable read-only memory (EPROM), or an electrically erasable programmable read-only memory (EEPROM) (registered trademark). The memory also includes recording media in which computer-readable programs are recorded. The recording media include at least one of a nonvolatile or volatile semiconductor memory, a magnetic disk, a flexible disk, an optical disk, a compact disc, or a digital versatile disc (DVD). The blower 1 may include integrated circuits such as an application specific integrated circuit (ASIC) and a field-programmable gate array (FPGA).

As described above, the blower 1 according to the first embodiment includes: the blower fan 2; the direct current motor 3 that rotationally drives the blower fan 2; and the motor controller 24 that controls the direct current motor 3. In controlling the direct current motor 3, the motor controller 24 uses the control method selected out of the plurality of control methods having the characteristic curves that incline differently from one another and intersect one another. Each of the characteristic curves represents the air volume versus static pressure relationship of the blower fan 2. Thus, the blower 1 is capable of easy air volume control.

The blower 1 also includes the switch 30 that is used in selecting an arbitrary control method out of the plurality of control methods. The motor controller 24 controls the direct current motor 3 with the control method selected by the switch 30. Thus, the blower 1 can easily select the control method using the switch 30.

The motor controller 24 controls the direct current motor 3 with the control method selected through the operation of the remote controller 7 out of the plurality of control methods. Thus, the blower 1 can easily select the control method using the remote controller 7.

The blower 1 also includes the specified information obtainer 22 and the selection processor 23. The specified information obtainer 22 obtains the specified information that includes each of the air volume value and the static pressure value for the blower fan 2. On the basis of the specified information obtained by the specified information obtainer 22, the selection processor 23 selects the control method that has among the respective characteristic curves of the plurality of control methods the characteristic curve satisfying the condition preset for the point that is identified by the air volume and static pressure values specified in the specified information. The motor controller 24 controls the direct current motor 3 with the control method selected by the selection processor 23. Thus, the blower 1 can perform the air volume control more easily.

The specified information obtainer 22 obtains the specified information from the remote controller 7. Thus, the blower 1 can easily control the air volume using the remote controller 7.

The plurality of control methods in the blower 1 include the three control methods having the characteristic curves that incline differently and intersect one another. Thus, the blower 1 can select the control method from the three control methods, enabling the air volume to be more easily controlled than when the control method is selected from two of the control methods.

The above configurations illustrated in the embodiment are illustrative, can be combined with other techniques that are publicly known, and can be partly omitted or changed without departing from the gist.

### Reference Signs List

1 blower; 2 blower fan; 3 direct current motor; 4 rotational speed detector; 5 current detector; 6 control board; 7 remote controller; 10, 71 communicator; 20, 74 processor; 21 selected information obtainer; 22 specified information obtainer; 23 selection processor; 24 motor controller; 30 switch; 72 operating part; 73 screen ; 80 control method setting screen; 81 pointer; 90 air volume and static pressure setting screen; 91 air volume value setting frame; 92 static pressure value setting frame.

## Claims

1. A blower comprising:
a blower fan;
a direct current motor adapted to rotationally drive the blower fan; and
a motor controller adapted to control the direct current motor, wherein
in controlling the direct current motor, the motor controller uses a control method selected from a plurality of control methods having characteristic curves that incline differently from one another and intersect one another, each of the characteristic curves representing an air volume versus static pressure relationship of the blower fan.

2. The blower according to claim 1, further comprising
a switch adapted to select an arbitrary control method out of the plurality of control methods, wherein
the motor controller is adapted to control the direct current motor with the control method selected by the switch.

3. The blower according to claim 1 or 2, wherein
the motor controller is adapted to control the direct current motor with a control method selected through operation of a remote controller out of the plurality of control methods.

4. The blower according to any one of claims 1 to 3, further comprising:
a specified information obtainer adapted to obtain specified information including an air volume value and a static pressure value for the blower fan; and
a selection processor adapted to select on a basis of the specified information obtained by the specified information obtainer the control method having among respective characteristic curves of the plurality of control methods a characteristic curve satisfying a condition preset for a point that is identified by the air volume value and the static pressure value that are specified in the specified information, wherein
the motor controller is adapted to control the direct current motor with the control method selected by the selection processor.

5. The blower according to claim 4, wherein
the specified information obtainer is adapted to obtain the specified information from the remote controller.

6. The blower according to any one of claims 1 to 5, wherein
the plurality of control methods include three control methods having the characteristic curves that incline differently and intersect one another.

7. A method for controlling a blower that includes a direct current motor adapted to rotationally drive a blower fan, the method comprising:
a first step of obtaining information on one control method among a plurality of control methods having characteristic curves that incline differently from one another and intersect one another, each of the characteristic curves representing an air volume versus static pressure relationship of the blower fan; and
a second step of controlling the direct current motor on a basis of the information on the one control method obtained at the first step.
